# EUROPEAN PATENT APPLICATION

(11) **EP 4 406 687 A1**
(43) Date of publication of application: **31.07.2024**
(21) Application number: 22876739.8
(22) Date of filing: 20.09.2022
(51) Int. Cl.: B23K 26/04, B23K 26/03, B23K 26/20, B23K 1/005, B23K 26/046

(54) **LASER SOLDERING DEVICE WITH ADJUSTABLE LASER IRRADIATION POSITION AND SOLDERING METHOD COMPRISING SAME**

(30) Priority: 29.09.2021 KR 20210128641
(71) Applicant: Laserwall Technology Co., Ltd, Hwaseong-si, Gyeonggi-do 16648 (KR)
(72) Inventor: CHOI, Byoung Chan, Gwangmyeong-si Gyeonggi-do 14255 (KR); CHUNG, Yong Woo, Suwon-si Gyeonggi-do 16391 (KR)
(74) Representative: BCKIP Part mbB
(86) International application number: PCT/KR2022/014055
(87) International publication number: WO 2023/054966

(57) **Abstract**

The present invention provides a laser soldering apparatus and a soldering method, the laser soldering apparatus comprising: a solder unit for forming a bonding surface by performing the soldering by a laser beam, and comprising at least one nozzle unit for accommodating a solder ball to which the laser beam is irradiated; and a monitoring unit arranged on one side of the solder unit to monitor the irradiation position of the laser beam, wherein the irradiation position of the laser beam irradiated from the solder unit is adjusted to be irradiated to the central point of the nozzle unit or the solder ball according to the monitoring result of the monitoring unit.

## Description

### Technical field

The present invention relates to a laser soldering apparatus capable of adjusting a laser irradiation position and a soldering method including the same.

### Background Art

Recently, miniaturization and thinning of electronic apparatuses are rapidly progressing. In addition, miniaturization and thinning of electronic components such as semiconductor apparatuses mounted in such electronic apparatuses are also required. In addition, the density of electronic components has progressed, and the number of connection terminals is increasing.

As an electronic component mounting method to meet such a demand, a method of surface-mounting solder balls as external connection terminals on a mounting substrate such as a printed circuit board has recently been applied by flip chip mounting or the like. The mounting method is a method of directly bonding a solder ball to an electrode of a mounting substrate after mounting the solder ball on the electrode installed on the substrate of the electronic component.

Therefore, when a surface mounting method using a solder ball is applied, a method of positioning the solder ball on an electrode of a substrate on which the solder ball is mounted on the substrate of the electronic component and then heating and melting the solder ball to bond the solder ball to the electrode is generally used.

Among such soldering methods, a method of heating and melting a solder ball by irradiating a laser beam on the surface of the solder ball for high-accuracy and high-quality soldering has recently been applied. However, a preset laser irradiation position may be changed due to an external impact or external vibration, or a melting state of the solder ball may be changed due to an error in setting a laser irradiation position of an operator, thereby causing deterioration in a soldering position and a soldering quality.

### Summary of Invention

### Technical problems

An object of the present invention is to provide a laser soldering apparatus in which a laser irradiation position is adjusted, capable of greatly improving the accuracy of a laser irradiation position for heating and melting a solder ball, and a soldering method including the same.

In addition, the present invention provides a laser soldering apparatus and a soldering method including the same, wherein the soldering apparatus is configured such that an optical module and an image apparatus are provided together on a solder unit including a nozzle unit, whereby the optical module, the image apparatus, and the nozzle unit of the solder unit can be disposed at the shortest distance, thereby enabling faster soldering and adjustment of the irradiation position of a laser.

### Solution to Problem

In order to achieve the above object, according to an aspect of the present invention, there is provided a laser soldering apparatus comprising an adjusted laser irradiation position, the laser soldering apparatus including: a solder unit performing the soldering by a laser beam to form a bonding surface and comprising at least one nozzle unit in which a solder ball to which the laser beam is irradiated is accommodated; and a monitoring unit disposed on one side of the solder unit to monitor the irradiation position of the laser beam, wherein the irradiation position of the laser beam irradiated from the solder unit may be adjusted to be irradiated to the nozzle unit or a central point of the solder ball according to the monitoring result of the monitoring unit.

In an embodiment of the present disclosure, the laser beam measurement apparatus may further include a beam adjusting unit disposed at one side of the solder unit to adjust a focal position of the laser beam.

In an embodiment of the present disclosure, the beam adjusting unit may include a beam focusing unit configured to adjust a focal position of the laser beam, a laser irradiation unit configured to acquire information on a position to which the laser beam adjusted by the beam focusing unit is to be irradiated and an alignment state to irradiate the laser beam onto the object to be processed, and a pyrometer configured to measure a surface temperature or a melting temperature of a processing point of the object to be processed.

In an embodiment of the present disclosure, at least one of the pyrometer and the monitoring unit may be provided in a configuration independently separated from the solder unit.

In an embodiment of the present disclosure, at least one of the pyrometer and the monitoring unit may include a structure connected to the solder unit through an optical fiber.

In an embodiment of the present disclosure, the solder unit may further include at least one beam conversion apparatus configured to adjust an output area of the laser beam.

In an embodiment of the present disclosure, the laser beam emitted from the solder unit may be a laser beam including a plurality of wavelengths, and each wavelength may be transmitted to the objects to be processed between different or same to perform one or more processing among welding, bonding, bonding, and soldering.

In an embodiment of the present disclosure, the solder unit may further include an imaging unit for image-processing the object to be processed, so that the laser irradiation position may be aligned.

In an embodiment of the present disclosure, the transmission of the laser may include at least one of a diode laser, a semiconductor laser, and a fiber laser transmission to the head unit through an optical fiber.

In an embodiment of the present disclosure, the laser irradiation position may be aligned, wherein the core of the optical fiber includes a structure formed in a circular or polygonal shape.

In an embodiment of the present disclosure, the object to be processed may be pre-bonded and the laser irradiation position transferred by a transfer unit may be aligned.

In an embodiment of the present disclosure, the laser irradiation position of the laser irradiated with an output in the form of a flat-top may be aligned.

In an embodiment of the present disclosure, the object to be transferred of the transfer unit may further include a substrate, and the substrate may be disposed such that the object to be processed is stacked on the substrate.

In addition, the laser soldering apparatus for adjusting a laser irradiation position, according to the present disclosure, comprises: a control unit; a transfer unit for transferring a plurality of objects to be processed; a solder unit operated by the control unit so as to solder the objects to be processed located on the transfer unit and performing the soldering by means of a laser beam to form a bonding surface; and at least one nozzle unit for accommodating the solder ball irradiated with the laser beam, wherein the laser beam irradiated from the solder unit can be adjusted so as to be eccentric with respect to the center line of the solder ball and irradiated.

According to another aspect of the present disclosure, there is provided a soldering method using the above-described laser soldering apparatus capable of adjusting the irradiation position of a laser beam, the soldering method including: a transfer step of arranging an object on a transfer part; a monitoring step of monitoring the position of a central point of a nozzle unit or a solder ball; a normal position of a laser beam irradiated from a solder unit so that the laser beam is irradiated to the central point of the nozzle unit or the solder ball; a soldering step of irradiating the laser beam to the solder ball from a laser generation unit of the solder unit; and an irradiation position correction step of adjusting the irradiation position of the laser beam by confirming the displacement of the central point of the nozzle unit or the solder ball according to the position change of the central point of the nozzle unit or the solder ball.

In an embodiment of the present disclosure, the irradiation position correcting step may be corrected such that an irradiation point of the laser beam spaced apart from a virtual center line passing through a center point of the nozzle unit is aligned with the center point of the nozzle unit.

Details of other embodiments are included in the detailed description and drawings.

### Advantageous Effects of Invention

According to the laser soldering apparatus of which the irradiation location of a laser is adjusted and a soldering method including the same, the accuracy of the irradiation location according to the laser irradiation and the processing efficiency according to the same can be greatly improved by aligning the central point of the laser irradiation location with respect to the soldering and positioning the laser irradiation location at a right position.

The laser soldering apparatus capable of adjusting the irradiation position of a laser, and a soldering method comprising the same, according to the present invention, the optical module and the image apparatus are configured on the solder unit comprising the nozzle unit together, so that the optical module, the image apparatus, and the nozzle unit of the solder unit can be disposed at the shortest distance, thereby enabling faster soldering and adjustment of the irradiation position of a laser.

The effects of the present disclosure, are not limited to the effects mentioned above, and other effects not mentioned will be clearly understood by those skilled in the art from the description of Claims.

### Brief Description of Drawings

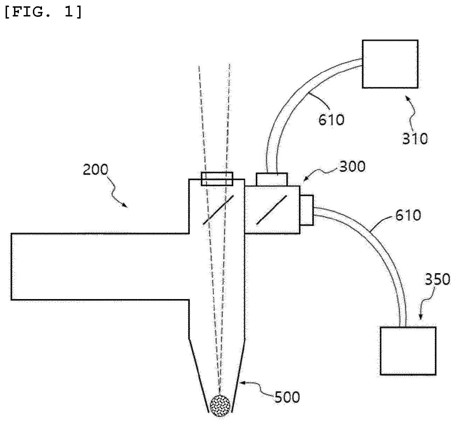

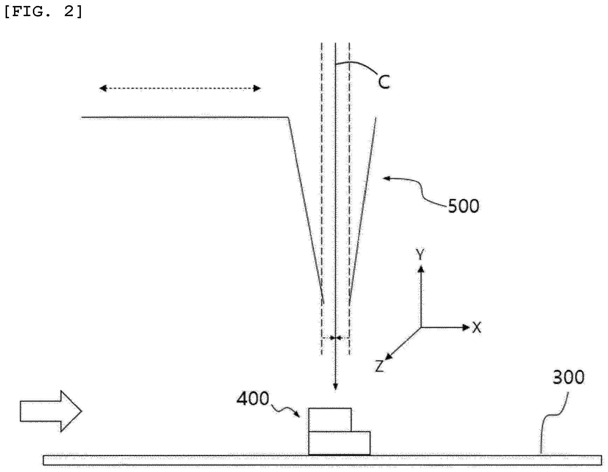

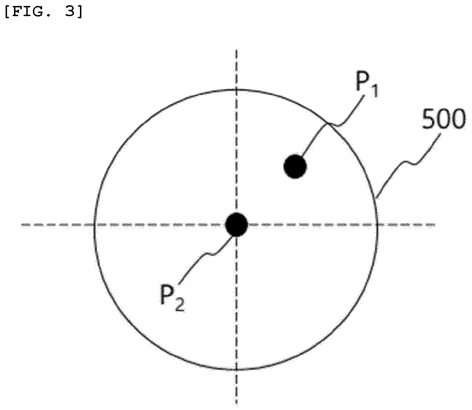

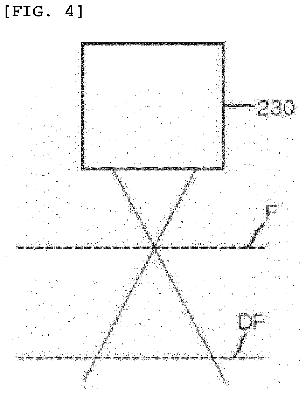

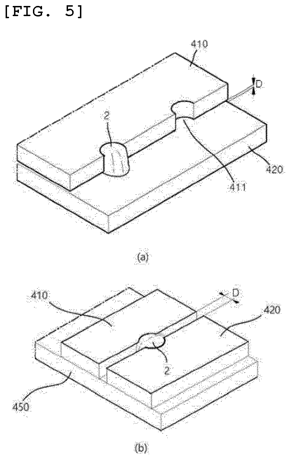

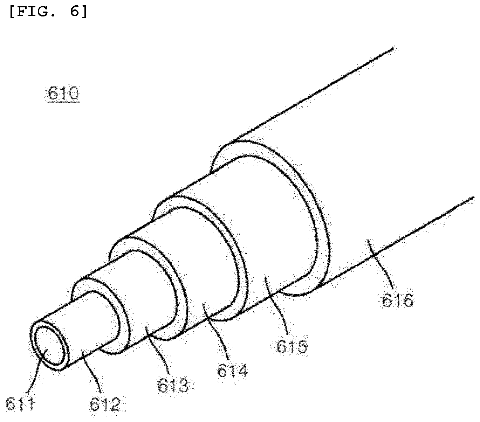

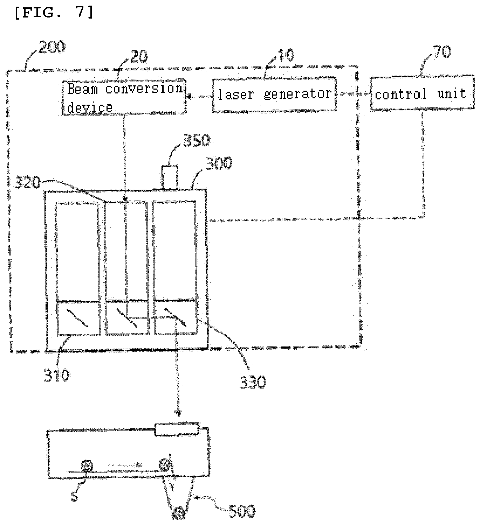

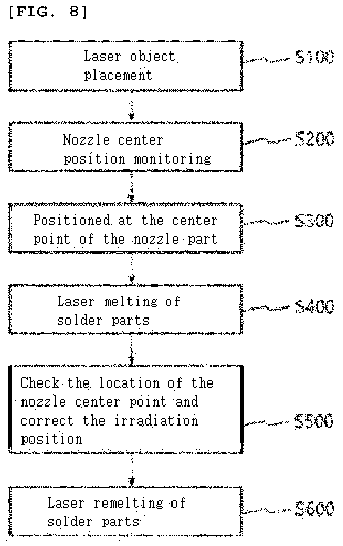

FIG. 1 is a schematic configuration diagram of a laser soldering apparatus in which a laser irradiation position is adjusted according to an embodiment of the present invention, FIG. 2 is a view illustrating a nozzle unit of the laser soldering apparatus according to an embodiment of the present invention, FIG. 3 is an exemplary view illustrating an example of adjusting a processing position of a nozzle unit to which a laser beam is irradiated according to an embodiment of the present invention, FIG. 4 is a view illustrating a state of preheating and heating through a laser according to an embodiment of the present invention, FIG. 5 is a view illustrating an arrangement of an object according to an embodiment of the present invention, FIG. 6 is a view illustrating a configuration of an optical fiber for transmitting a laser according to an embodiment of the present invention, FIG. 7 is a schematic configuration diagram of a laser soldering apparatus in which a laser irradiation position is adjusted according to another embodiment of the present invention, and FIG. 8 is a flowchart illustrating an operation process of a soldering apparatus according to an embodiment of the present invention.

### Description of Embodiments

Hereinafter, an embodiment of the present invention will be described in detail with reference to the accompanying drawings. It should be noted that, in adding reference numerals to elements of each drawing, the same elements will be designated by the same reference numerals, if possible, even though they are shown in different drawings. In addition, in describing the embodiment of the present invention, when it is determined that a detailed description of a related known configuration or function interferes with the understanding of the embodiment of the present invention, the detailed description thereof will be omitted.

In describing the components of the embodiments of the present disclosure, terms such as first, second, A, B, (a), (b), etc. may be used. These terms are merely for distinguishing the components from other components, and the nature, order, or order of the components is not limited by the terms. In addition, unless otherwise defined, all terms used herein, including technical or scientific terms, have the same meanings as those generally understood by those skilled in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Through the soldering apparatus and method in which the laser irradiation position is adjusted according to the embodiment of the present disclosure, laser processing processes such as marking, drilling, bonding, welding, bonding, and soldering may be performed on the laser processing object. Hereinafter, a laser soldering apparatus and method of the present invention will be described as an example of performing soldering. That is, it is possible to perform only the process for soldering by employing the laser processing apparatus as a soldering apparatus. Hereinafter, in this case, the laser processing apparatus may be described as a soldering apparatus.

Furthermore, the soldering apparatus for adjusting a laser irradiation position according to the embodiment of the present invention may be included in various processes such as welding, soldering, bonding, and the like, and a material on which each process is performed may be applied to various materials such as polymer, metal, dielectric, semiconductor, glass, and the like.

As described above, in the case of the conventional jet soldering, there is a problem in that a preset laser irradiation position is changed due to an external impact or external vibration on the laser beam and the nozzle transmitted to the optical head or an alignment problem due to an error in setting a laser irradiation position by an operator.

Accordingly, in the present invention, as described below, a position at which the laser beam is irradiated to the central point of the nozzle unit of the laser soldering apparatus may be adjusted to a correct position so that the laser irradiation may proceed. That is, the laser irradiation position (x, y, z) with respect to the central point of the nozzle unit may be adjusted and aligned so as to greatly improve the accuracy of the laser irradiation position for heating and melting.

FIG. 1 is a schematic configuration diagram of a laser soldering apparatus in which a laser irradiation position is adjusted according to an embodiment of the present invention, FIG. 2 is a view illustrating a nozzle unit of a soldering apparatus of a laser soldering apparatus according to an embodiment of the present invention, and FIG. 3 is an exemplary view illustrating an example of adjusting a processing position of a nozzle unit to which a laser beam is irradiated according to an embodiment of the present invention.

Referring to these drawings, a laser soldering apparatus 100 according to the present invention includes a controller 70 (FIG. 7), a solder unit 200 which is operated to be movable under the control of the controller 70 (FIG. 7) to solder an object 400, forms a bonding surface by performing soldering by a laser beam, and has a nozzle unit 500 accommodating a solder ball S to which the laser beam is irradiated, a monitoring unit 350 which is disposed on one side of the solder unit 200 and monitors a position to which the laser beam is irradiated, and a beam adjusting unit 300 which adjusts the focal position of the laser beam, and the irradiation position of the laser beam irradiated from the solder unit 200 may be adjusted to be irradiated to the nozzle unit 500 or the central point of the solder ball S according to the monitoring result of the monitoring unit 350.

The beam adjustment unit 300 may include a beam focusing unit 320 (see FIG. 7) configured to adjust a focal position of the laser beam, a laser irradiation unit 330 (see FIG. 7) configured to obtain information about a position and an alignment state at which the laser beam adjusted by the beam focusing unit 320 is to be irradiated and irradiate the laser beam onto the object 400, and a Pyrometer 310 (see FIG. 7) configured to measure a surface temperature or a melting temperature of a processing point of the object 400. The monitoring unit 350 may be, for example, a dynamic focusing module or a camera module, but is not limited thereto.

That is, the soldering apparatus 100 according to the present disclosure is compactly configured such that the beam adjustment unit 300, which is an optical module, is disposed together with the solder unit 200 on which the nozzle unit 500 is formed, and the monitoring unit 350 monitoring the position to which the laser beam is irradiated and the pyrometer 310 measuring the surface temperature or the melting temperature of the processing point of the object 400 are connected through an optical fiber (610 of FIG. 6). Therefore, it is possible to more quickly control the detection according to the focus adjustment of the laser beam and the nozzle unit 500 and the insertion of the solder ball S.

Further, an image signal confirmed through the monitoring unit 350 connected to the beam adjustment unit 300 may be transmitted to the optical fiber 610 (see FIG. 6), imaged, and displayed. In addition, the melting temperature signal of the surface of the target object 400 or the solder ball S is transmitted to the optical fiber 610 (see FIG. 6) through the pyrometer 310 connected to the beam adjustment unit 300, so that the temperature distribution may be displayed as a stereoscopic graph. In this case, a lens and a filter (not shown) for effectively transmitting the image signal or a signal such as a melting temperature may be coupled to the optical fiber (610 of FIG. 6).

The laser soldering apparatus 100 according to the present invention may improve the accuracy of the processing position by monitoring and calculating the displacement according to the position change of the virtual center line C passing through the center point of the nozzle unit 500 provided to irradiate and discharge the laser beam to the solder ball S and correcting the displacement to be movable by a predetermined distance and angle. In this case, according to the present disclosure, in order to correct the irradiation position at which the laser beam is irradiated to the central point of the nozzle unit 500, the solder unit 200 and the nozzle unit 500 may be moved and adjusted independently of each other.

That is, the laser soldering apparatus 100 according to the present invention is characterized in that the point to which the laser beam is irradiated is adjusted to be corrected to the center point of the nozzle unit 500. For example, as shown in FIG. 3, the laser soldering apparatus 100 may be corrected to move from the irradiation position P1 of the laser beam to the central point P2 of the nozzle unit 500 through the image obtained from the monitoring unit 350 before, during, or even after the irradiation of the laser beam.

In this way, the movement of the irradiation position of the laser beam may be controlled through the control unit 70. The controller 70 may determine x, y, and z coordinates, which are focus coordinates of a position to which the laser beam is irradiated, using the detection value input from the monitoring unit 350 and measured. The focal coordinates may be adjusted such that the z-axis focal position of the laser beam passing through the beam conversion apparatus 20 is adjusted by the dynamic focusing module (not shown), and the x-axis and y-axis focal positions are accurately positioned as the center point position of the nozzle unit 500 by the scanhead (not shown). The x-axis scan mirror and the y-axis scan mirror of the scan head may reflect the laser beam to irradiate the laser beam to a desired location of the object 400. The x-axis scan mirror and the y-axis scan mirror are configured as a pair of scan mirrors in a galvanometer manner, and each of the pair of scan mirrors may deflect a laser beam in one direction of axes transverse to the x-y plane. In the present disclosure, by adjusting the focus coordinates (x, y, z) of the center point of the nozzle unit 500 to which the laser beam is irradiated, ideal soldering position adjustment and quality improvement may be confirmed.

In addition, such a focus coordinate may be adjusted using a precision stage composed of at least three axes, and may include a tilt stage to adjust the angle at which the laser beam is emitted. Here, the tilt stage may include at least one of x theta, y theta, and z theta.

Meanwhile, in the laser soldering apparatus 100 according to the present invention, the solder balls S may be sequentially moved by gravity or a transfer assist gas from an external transfer means (not shown) and supplied to the nozzle unit 500. In this case, the solder ball S may be supplied to the nozzle unit 500 side at an appropriate speed by the transfer assist gas. The solder ball S is formed in a substantially spherical shape and is made of a metal alloy and may be melted by laser irradiation or the like. The solder balls S may be used to attach an electronic component or an electrical component to a substrate 450 (see FIG. 5). Here, the solder ball may be made of one material such as polymer, glass, metal, and a mixture.

The solder ball S supplied to the nozzle unit 500 moves downward along the inner surface of the nozzle unit 500, and may eventually reach the nozzle tip (not shown). The nozzle tip may move to a position to which the solder ball S is to be applied, and the solder ball S reaching the nozzle tip may be melted by a laser and applied to the substrate 450 (see FIG. 5). As described above, the solder ball S may be naturally separated from the nozzle unit 500 and applied to the base material only by melting the solder ball S with a laser, or the solder ball S may be separated from the nozzle unit 500 by supplying a separate auxiliary gas in order to improve the efficiency and quality of the soldering process, without the need to separately supply a gas or the like in order to separate the solder ball S from the nozzle tip of the nozzle unit 30.

In addition, according to the present invention, the laser soldering apparatus 100 may further include a sensing unit. The sensing unit (not shown) may include a sensor for sensing a melting temperature or a thermal distribution of the solder ball S according to the laser irradiation, a thermal temperature distribution sensor for sensing a temperature distribution of the object 400, a laser power sensor for sensing a laser irradiation intensity, a beam position sensor for sensing a laser irradiation position, a laser profile, a bonding quality inspection apparatus, and the like. The sensing unit may transmit and receive such a sensing result to and from the controller 70. Here, in bonding of the object 400, the bonding quality inspection apparatus may record the characteristics of the material, the bonding method, and the bonding quality (bonding area, bonding depth, bonding strength, Crack, Void, cold lead, non-lead, excessive lead, heat influence degree, etc. of the bonding unit).

Hereinafter, a soldering process using the position-adjustable laser soldering apparatus 100 will be described with reference to FIG. 8.

FIG. 8 is a flowchart showing a laser processing process according to an embodiment of the present invention.

First, the irradiation position of the laser beam of the present invention may be adjustable to the center point of the nozzle unit 500. The transfer unit 300 of the laser soldering apparatus 100 may transfer the object 400 to be disposed at the target point (S100). A separate substrate 450 may be additionally interposed in the transport unit 300 under the object 400.

The image module 350 formed on one side of the solder unit 200 may monitor a central point of the nozzle unit 500 in real time from the virtual central line C (S200), and may correct the irradiation position of the laser beam to be accurately positioned at the central point of the nozzle unit 500 (S300).

In some cases, the position of the solder ball S injected into the nozzle unit 500 is checked in real time through the monitoring unit 350 formed on one side of the solder unit 200, and if there is a change in the position of the solder ball S, the irradiation position of the laser beam irradiated from the solder unit 200 may be adjusted accordingly. In this case, the process of adjusting the irradiation position of the laser beam may be adjusted according to the calculated numerical value by measuring the displacement changed by comparing with the previously measured position of the solder ball S.

Next, the laser beam passing through the solder unit 200 may heat and melt a portion of the object 400 to which bonding is performed from the laser generation unit 110 by irradiating a laser beam (S400). In this case, a heated portion including the object 400 may include the substrate 450.

Thereafter, during or after the bonding process (S400) according to the irradiation of the laser beam, the laser beam may be irradiated so as to be re-melted by additionally monitoring the change in the position of the central point of the nozzle unit 500 and the position of the solder ball S through the monitoring unit 350 formed on one side of the solder unit 200 (S500 and S600).

FIG. 4 is a view illustrating a state of preheating and heating through a laser according to an embodiment of the present invention, FIG. 5 is a view illustrating an arrangement of a first object 410 and a second object 420 according to an embodiment of the present invention, in which FIG. 5A is a view illustrating that the first object 410 and the second object 420 are disposed at a predetermined separation distance and the solder bump 2 is positioned at the separation distance and bonded to each other, and FIG. 5B is a view illustrating that the first object 410 and the second object 420 are bonded to each other on a separate substrate 450 according to another embodiment of the present invention.

Referring to FIG. 5A, the objects 400 (410, 420) may have a step or may be disposed at a predetermined separation distance D. For example, a concave bonding surface 411 on which the solder bump 2 may be located may be formed on the first object 410, and a bonding surface 411 may be formed between the first object 410 and the second object 420 disposed to form a step.

A concave bonding surface 411 on which the solder bump 2 may be located may be formed on the first object 410, and the bonding surface 411 may be formed on the second object 420 facing each other at the separation distance D. In this example, two bonding surfaces 411 are formed, and the object 400 disposed at a step or a separation distance D may be bonded while the solder bump 2 is positioned on the bonding surface 411.

In the above-described secondary soldering process, laser irradiation is performed in a state in which the solder bump 2 is positioned to further dissolve the solder bump 2 so that the liquid solder may be distributed in a space formed by the step or the separation distance D. The distribution may be expected to increase or improve the bonding strength by increasing the bonding area between the first object 410 and the second object 420 after the solder is cured.

This increase in bonding strength may increase the effect of the dissolved solder bump 2 as the wettability improves. The improvement of wettability may be degraded due to a temperature difference between the object 400 and the solder bump 2. The temperature of the target object 400 may be room temperature, and a temperature difference may occur in the high-temperature solder bump 2 that is partially dissolved by the laser. When wettability is reduced on the bonding surface 411 of the first object 410 due to the temperature difference, the contact area between the solder bump 2 and the object 400 may be reduced.

Therefore, a preheating process of reducing the temperature difference may be performed to improve the wettability. This preheating process may be performed by adjusting the height of the head unit 230 to form a separation distance between the laser focus and the object apart from the laser focus, in addition to the method of additionally irradiating the laser beam by the laser generator 20. Referring to FIG. 4, the head unit 230 may selectively adjust a Focusing F and a Defocusing DF from an object 400.

When the object 400 is positioned at the focusing F, since the output of the laser is concentrated, the metal object 400 may be melted or damaged due to heat. Therefore, the laser irradiation may be performed on the solder bump 2 in order to melt the solder bump 2 while concentrating on the focusing F.

In addition, when the target object 400 is positioned at the defocusing DF, since the output of the laser is dispersed and the laser irradiation area increases, the target object 400 may be positioned at the defocusing DF when heated over a large area. Therefore, when the laser is irradiated at the defocusing DF, a temperature difference between the solder bump 2 and the object 400 may be minimized to increase wettability, thereby increasing an adhesive area.

Meanwhile, referring to FIG. 5B, the first object 410 and the second object 420 may be disposed at a predetermined separation distance D on the additionally provided substrate 450 and bonded by solder. Specifically, when the objects 400 (410 and 420) are loaded and transported on the transport unit 300, they may be disposed to be spaced apart from each other by a predetermined distance and may be disposed on the substrate 450. That is, the substrate 450 and the objects 400 (410 and 420) may be sequentially stacked and disposed above the transport unit 300. Of course, this is only for the example of stacking in the vertical direction, and in the case of stacking in the horizontal direction, a member closer to the head unit 230 may be the object 400. In the embodiment of FIG. 5(b), the objects 400 (410, 420) are spaced apart from each other in the horizontal direction on the substrate, whereas in the embodiment of FIG. 5(a), the objects 400 (410, 420) may be spaced apart from each other in the vertical direction. Accordingly, the solder bump 2 may be located in the spaced space, and thus, the bonding surface 411 may be formed over the first object 410, the second object 420, and the substrate 450 in FIG. 5B.

A bonding surface 411 may be concavely formed on the objects 410 and 420 so that the solder ball S may be discharged and positioned at a predetermined position in the state of the solder bump 2, and may be selectively positioned on at least one of the first object 410 and the second object 420. In this example, the concavely formed bonding surface 411 may be formed on each of the objects 410 and 420.

The formation of the bonding surface 411 may improve wettability and lead to an increase in bonding force. The improvement of wettability may be degraded due to a temperature difference between the object 400 and the solder bump 2. Specifically, the temperature of the target object 400 may be room temperature, and a temperature difference may occur in the high-temperature solder bump 2 that is partially dissolved by the laser. When wettability is reduced on the bonding surface 411 of the first object 410 due to the temperature difference, the contact area between the solder bump 2 and the object 400 may be reduced.

Therefore, the above-described preheating process of reducing the temperature difference may be performed to improve the wettability. The preheating process may be performed by changing information such as the height of the head unit 230 or the laser output to form a separation distance between the laser focus and the object while being spaced apart from the laser focus. Referring to FIG. 4, the head unit 230 may selectively adjust a Focusing F and a Defocusing DF from an object 400.

When the object 400 is positioned at the focusing F, since the output of the laser is concentrated, the metal object 400 may be melted or damaged due to heat. Therefore, the laser irradiation may be performed on the solder bump 2 in order to melt the solder bump 2 while focusing on the focusing F.

In addition, when the target object 400 is positioned at the defocusing DF, since the output of the laser is dispersed and the laser irradiation area increases, the target object 400 may be positioned at the defocusing DF when heated over a large area. Therefore, when the laser is irradiated at the defocusing DF, a temperature difference between the solder bump 2 and the object 400 may be minimized to increase wettability, thereby increasing an adhesive area.

Specifically, referring to the embodiment shown in FIG. 5 showing the preheating process and the distribution of the solder bumps 2, the objects 400 (410 and 420) located at the defocusing DF described above with reference to FIG. 4 may be preheated. The solder bump 2 may be located in the area of the portion to be preheated. More precisely, the solder bump 2, that is, the peripheral portion of the bonding point including the bonding point, may be a preheating unit (not shown). A step or a separation distance D between the solder bump 2 and the objects 410 and 420 may be partially included in the preheated portion, and the solder bump 2 may be introduced into the step or the separation distance D by melting of the solder bump 2 in the secondary soldering process after the preheating process. As a result of the inflow, the solder may be cured in a state in which an inflow unit (not shown) is formed, and the bonding areas of the objects 410 and 420 may be increased by the inflow unit, thereby further increasing the bonding force.

FIG. 6 is a diagram illustrating a configuration of an optical fiber 610 for transmitting a laser according to an embodiment of the present invention.

Referring to FIG. 6, it may be a fiber laser (FL) or a diode laser transmitted to the head 230 of the multi-laser soldering apparatus 100 according to the present disclosure through an optical fiber, and such an optical fiber 610 may be composed of a core 611 and sheaths 612, 613, 614, 615, and 616 to which the laser beam is transmitted. Specifically, the core 611 is a component capable of transmitting a laser through total reflection or the like, and the sheaths 612, 613, 614, 615, and 616 are components that serve to protect the core 611 from impact without exposing the core to the outside, and may include one or more. For example, the plurality of sheaths 612, 613, 614, 615, and 616 may include a material such as polyvinyl chloride for impact absorption, aramid yarn for enhancing durability, polyimide, silicone, or the like.

In addition, the shape of the core 611 positioned in the sheaths 612, 613, 614, 615, and 616 may be variously formed. The core comprising various shapes may have various shapes such as a quadrangle, a polygon, and a circle. Depending on the size and shape of the core, the size and quality of the laser may vary.

According to the above-described laser soldering apparatus and soldering method, an apparatus or method according to an embodiment of the present invention may include the following configuration. The inspection described below may include a pre-inspection and a post-inspection performed by the inspection unit. The first inspection may detect an alignment state including a seating state of an object, that is, a rotation state and an arrangement state, and a position at which soldering is to be performed before soldering is performed, and the second inspection may detect one or more of types of defects such as open, short, crack, void, excessive lead, contamination with a bridge, small lead, cold lead, poor wetting, overheating, corrosion, erosion, component position deviation, component steaming, and non-lead of a solder unit after soldering is performed. As described below, an object that fails to satisfy the quality standard as a result of the second inspection may be classified into an object that satisfies the quality standard, and rework (resoldering and rework) may be performed on the object that fails to satisfy the quality standard.

First, the laser supplied from the laser supply apparatus may be a laser comprising a wavelength comprising a high laser absorption rate depending on the solder material. In addition, it may be a solid laser such as a fiber laser or a diode laser. The laser beam generated from the laser generating apparatus may be transmitted to the laser soldering head through the optical fiber without a separate optical mirror. Accordingly, precise operation may be possible during stable supply of the laser and soldering by laser irradiation.

Second, the laser processing apparatus may include a pick and place soldering head or a jet soldering head including a laser soldering nozzle. The laser soldering head may include a laser beam focusing optical head, a solder ball (S) supply apparatus, and the nozzle. Here, the laser soldering head may be a single head or a dual head including two heads. Further, it goes without saying that it may be composed of a head body including three or more heads. When two or more laser soldering heads are included as described above, the productivity of the apparatus may be increased.

Third, it may include a vision inspection module/unit or a vision inspection step. By including such a vision inspection module or step, a position inspection, an alignment state inspection, a position inspection to be soldered, and the like (PreInspection) of the camera module to be soldered may be performed, and the soldering quality after soldering may be inspected (PostInspection) as necessary. Therefore, 1) a vision inspection module including a low magnification and a high magnification lens is installed, or 2) a motorized variable zoom lens (Motorized Variable Zoom Lens, 1X to x18: the highest magnification may be further increased according to the design of the Zoom Lens) is installed, thereby automatically inspecting a narrow area in a wide area and a high magnification at a low magnification. The pre-inspection and the post-inspection may be configured as one vision inspection module, but may be configured as separate vision inspection modules to increase productivity (for example, configured as one for a pre-inspection function and one for a post-inspection function).

When the pre-inspection and the post-inspection are provided as one vision inspection module, the object that has undergone the pre-inspection may be moved to a position for soldering and soldered, and then may return to a previous position and be post-inspected. When two vision inspection modules, that is, one for a pre-inspection function and one for a post-inspection function are provided, the object may be moved and inspected and soldered in order in which the pre-inspection module, the laser soldering module, and the post-inspection module are located.

In addition, parameters may be controlled by monitoring soldering quality in real time, or an infrared inspection apparatus or a three-dimensional inspection apparatus may be further included for post-inspection such as short circuit, short circuit, crack and void, overlead, contamination with a bridge, lead-free, cold lead, poor wetting, overheating, corrosion, erosion, misalignment of parts, moxibustion between parts, and non-lead in a soldered region.

Fourth, the apparatus may further include a sorting apparatus capable of sorting an object that does not meet a soldering quality standard required after the post-inspection.

Fifth, a repairing apparatus that may repair an object that is not suitable for a soldering quality standard required after post-inspection may be further included. Such a repairing apparatus may improve solder wettability by remelting the solder unit by reirradiating a laser thereon, or may remove a soldered solder and perform Resoldering (rework). When the soldered solder is removed, the solder may be removed automatically by using a mechanical tool such as a pin or by sucking the solder by remelting the solder using a laser.

Sixth, a cleaning apparatus including a dust collector for removing dust and foreign substances may be further included for quality management after soldering. The cleaning apparatus may further include at least one of a dry air blowing apparatus, a CO2 snow cleaning apparatus, a laser cleaning apparatus, and an inert gas blowing apparatus.

Seventh, it may further include a soldering prepayment for prepayment according to the type of substrate to be soldered. In addition, the laser soldering head is additionally included, thereby making it possible to improve soldering quality and maximize productivity.

In addition, the multi-laser soldering apparatus according to the present invention may further include a jig. The jig may be a rotating fixture jig that moves in a rotating movement manner. A jig channel including a plurality of fixture jig channels employing the rotational movement method may be provided. For example, a three fixture jig channel may be provided in which three or more jigs moved by a rotary movement method are coupled to each other. A plurality of objects to be soldered may be included in or seated on the fixture jig channel. Here, when one or more operations of soldering and bonding are performed on two or more points of an object, respectively, if one of the two points existing in one object is soldered or bonded, a jig may be moved so that laser processing may be performed on the other of the two points existing in the object.

Here, the movement of the jig may be rotation, movement by linear motion, or movement by a combination of the rotation and linear motion. When the movement is completed, soldering or bonding may be performed on the remaining points.

As a specific example, laser bonding head 1 may perform bonding on the portion fixture jig channel 1, and the laser bonding head 2 may perform bonding on the fixture jig channel 3. When the heads (laser bonding head 1 and laser bonding head 2) have completed bonding at their respective positions, the first head can perform a bonding operation on the fixture jig channel 2. When the fixture jig channel 1 is located at an unloading position deviated from the laser irradiation position, the object on which the bonding operation is completed may be taken out. A new object may be located on the fixture jig channel 1 from which the object is taken out, to wait for a bonding operation.

When the joining operation for the object located in the fixture jig channel 3 is completed, the object may be taken out, and a new object may be located on the fixture jig channel 3 from which the object is taken out to wait for the joining operation.

When the bonding operation of the laser bonding head 1 to the object located on the fixture jig channel 2 is completed, the laser bonding head 1 may perform the bonding operation to the object located on the fixture jig channel 1. In addition, when the fixture jig channel 2 is located at the unloading position, the object on which the joining operation is completed is taken out, and a new object may be located on the fixture jig channel 2 to wait for the joining operation.

When the laser bonding head 2 completes the bonding operation of the object on the fixture jig channel 3, the laser bonding head 2 may perform the bonding operation of the fixture jig channel 2. The bonding operation may be repeatedly performed, and laser processing may be performed.

Each object of the completed fixture jig channel may perform a post-inspection with one or two vision inspection modules/units.

Meanwhile, FIG. 7 is a schematic configuration diagram of a laser soldering apparatus in which a laser irradiation position is adjusted according to another embodiment of the present invention, and referring to FIG. 7, a laser soldering apparatus 100 according to another embodiment of the present invention may include a control unit 70, a solder unit 200 movably disposed, and a nozzle unit 500 formed on one side of the solder unit 200 and into which a solder ball S is inserted. Here, the solder unit 200 may include a laser generation unit 10 configured to generate a laser beam for applying heat to the solder ball S, a beam conversion apparatus 20 configured to adjust an output area or shape of the laser beam, a beam adjustment unit 300 configured to apply the laser beam comprising passed through the beam conversion apparatus 20 to the solder ball S irradiated to the object, and a monitoring unit 350 disposed on one side of the beam adjustment unit 300 and configured to monitor a position to which the laser beam is irradiated. According to the present disclosure, the monitoring unit 350 may be, for example, a dynamic focusing module or a camera module, but is not limited thereto.

The beam adjustment unit 300 may include a beam focusing unit 320 configured to adjust a focal position of the laser beam comprising passed through the beam conversion apparatus 20, a laser irradiation unit 330 configured to acquire information on a position at which the laser beam adjusted by the beam focusing unit 320 is to be irradiated and an alignment state and irradiate the laser beam onto the object, and a Pyrometer 310 configured to measure a surface temperature or a melting temperature with respect to a processing point of the object.

Here, the laser soldering apparatus 100 according to another exemplary embodiment of the present invention may be formed in a structure in which the solder unit 200 and the nozzle unit 500 are disposed adjacent to each other or connected to each other, unlike the above-described exemplary embodiment, but may be coupled to each other so as to be independently operable.

Those skilled in the art to which the present invention pertains will be able to understand that the present invention may be implemented in other specific forms without changing the technical idea or essential features thereof. Therefore, it should be understood that the embodiments described above are exemplary in all aspects and are not restrictive. The scope of the present invention is represented by claims to be described later rather than the above detailed description, and it should be interpreted that the meaning and scope of the claim and all changes or modified forms derived from the concept of equivalents thereof are included in the scope of the present invention.

## Claims

1. A laser soldering apparatus comprising:
a solder unit forming a bonding surface by performing soldering by a laser beam and comprising at least one nozzle unit accommodating a solder ball to which the laser beam is irradiated; and
and a monitoring unit disposed on one side of the solder unit and monitoring an irradiation position of the laser beam;
wherein the irradiation position of the laser beam irradiated from the solder unit is adjusted to be irradiated to a central point of the nozzle unit or the solder ball according to a monitoring result of the monitoring unit.

2. The laser soldering apparatus of claim 1, further comprising a beam adjusting unit disposed on one side of the solder unit to adjust a focal position of the laser beam.

3. The laser soldering apparatus according to claim 1, wherein the beam adjusting unit comprises:
a beam focusing unit configured to adjust a focal position of the laser beam;
a laser irradiation unit configured to acquire information on a position to which the laser adjusted by the beam focusing unit is to be irradiated and an alignment state to irradiate the laser beam onto the object to be processed; and
a pyrometer configured to measure a surface temperature or a melting temperature of a processing point of the object to be processed.

4. The laser soldering apparatus according to claim 3, wherein at least one of the pyrometer and the monitoring unit is provided in a configuration independently separated from the solder unit.

5. The laser soldering apparatus according to claim 3, wherein at least one of the pyrometer and the monitoring unit includes a structure connected to the solder unit through an optical fiber.

6. The laser soldering apparatus according to claim 1, wherein the solder unit further includes at least one beam conversion apparatus adjusting an output area of the laser beam.

7. The laser soldering apparatus according to claim 1, wherein the laser beam emitted from the soldering unit is a laser beam including a plurality of wavelengths, and each wavelength is transferred to the different or same processing objects to perform one or more processing among welding, bonding, bonding, and soldering.

8. The laser soldering apparatus according to claim 1, wherein the solder unit further comprises an imaging unit for image-processing the object to be processed.

9. The laser soldering apparatus according to claim 1, wherein the transmission of the laser includes at least one of a diode laser and a fiber laser transmission through the head unit of the optical fiber.

10. The laser soldering apparatus according to claim 9, wherein the core of the optical fiber includes a structure formed in a circular or polygonal shape.

11. The laser soldering apparatus according to claim 1, wherein the object to be processed is pre-bonded and transferred by a transfer unit, and a laser irradiation position is aligned.

12. The laser soldering apparatus according to claim 1, wherein the laser is irradiated in a flat-top form of output, and an irradiation position of the laser is aligned.

13. The laser soldering apparatus adjusting laser irradiation position according to claim 1, wherein the object to be transferred of the transfer unit further comprises a substrate, and the substrate is disposed such that the object to be processed is stacked on the substrate.

14. A laser soldering apparatus adjusting laser irradiation position, comprising:
a control unit;
a transfer unit transferring a plurality of objects to be processed;
a solder unit operated under the control of the control unit to solder the objects to be processed located on the transfer unit and performing the soldering by using a laser beam to form a bonding surface; and
at least one nozzle unit accommodating a solder ball to which the laser beam is irradiated,
wherein the laser beam irradiated from the solder unit is adjusted to be eccentrically irradiated with respect to a center line of the nozzle unit or the solder ball.

15. A laser soldering method, comprising:
disposing an object to be processed on a transfer part;
monitoring a position of a central point of a nozzle unit or a solder ball;
allowing an irradiation position of a laser beam irradiated from a solder unit to be a right position so that the laser beam is irradiated to the central point of the nozzle unit or the solder ball;
irradiating the laser beam from a laser generation unit of the solder unit to the solder ball; and
adjusting the irradiation position of the laser beam by confirming displacement of the central point of the nozzle unit or the solder ball according to a position change of the central point of the nozzle unit or the solder ball.

16. The laser soldering method of claim 15, wherein the irradiation position correction step is corrected so that an irradiation point spaced apart from a virtual center line passing through the center point of the nozzle unit is aligned with the center point of the nozzle unit.
